# EUROPEAN PATENT APPLICATION

(11) **EP 4 806 263 A1**
(43) Date of publication of application: **16.09.2026**
(21) Application number: 26162634.5
(22) Date of filing: 05.03.2026
(51) Int. Cl.: A01M 7/00, B05B 12/02

(54) **DEVICE FOR AUTOMATIC AND CONTROLLED NEBULISING OF LIQUIDS**

(30) Priority: 14.03.2025 IT 202500005228
(71) Applicant: Euroequipe S.r.l., 40053 Valsamoggia (BO) (IT)
(72) Inventor: DE NORA, Paolo, 40037 SASSO MARCONI (BOLOGNA) (IT)
(74) Representative: Milli, Simone

(57) **Abstract**

Described is an autonomous liquid nebulising device for treatments in gardens comprising a body (1) having a lateral surface (1c), a base (1a) and a head (1b) so as to define a closed inner space of the body (1); a dividing wall (17) positioned inside the body (1) so as to separate its inner space into a first chamber (2) containing the liquid to be nebulised and a second chamber (3) in which a distribution unit (4) for the liquid to be nebulised present in the first chamber (3) is housed; the unit (4) is connected to the first chamber (2) through a passage in the dividing wall (17) for drawing the liquid; the unit (4) is also connected, outside the second chamber (3), to a hydraulic nebulising system (6) to feed it with the liquid; a control unit (5) positioned in the second chamber (3) and connected to the distribution unit (4); the control unit (5) has a plurality of memory banks (15) programmed to activate or deactivate the distribution unit (4) according to respective stored treatment cycles.

## Description

The present invention relates to a device for nebulising liquids, more specifically an autonomous device for the automatic and controlled nebulising of liquids for insecticide treatment in gardens.

Currently, in the portions of private land used as gardens where ornamental plants, trees and separating hedges are grown, treatments are carried out against insects harmful to plants or people (such as, for example, mosquitoes) through the use of manual spraying devices using particular components (mixed with water in appropriate quantities) aimed at eliminating one or more categories of harmful insects or their larvae. These treatments, however, are at the discretion of the owner or gardener responsible for the garden and are not always carried out at appropriate intervals or with continuity during periods of peak infestation of certain harmful insects.

Such a discontinuity in treatments can therefore cause damage to the plants and inconvenience to the owners and/or users of the garden.

The aim of this invention is to provide a device for nebulising liquids which overcomes the drawbacks of the prior art described above.

In particular, an aim of the present invention to provide a self-sufficient device for nebulising liquids, which is capable of obtaining a constant and regular distribution of insecticide substances.

A further aim of the present invention is to propose an autonomous device for the nebulising of liquids which can be programmed for constant treatment cycles without outside intervention and with the possibility, if necessary, of also being connected to existing water circuits.

In particular, the structure of the treatment programmes and the kit provided with the device make it possible to achieve a low environmental impact, as the specific atomisers are installed within hedges and in shaded, damp areas, avoiding the flowering plants and the flowers.

The program cycles allow the selection of treatment delivery times during the night, which are appropriate for the target insects.

The device can be used with low residual pyrethroids that are not active during daylight hours for non-target insects such as bees, butterflies and many other insects which are not targets.

The device can also be used in green areas, at the edge of swimming pools, and in refreshment areas with biocidal repellents based on natural essences specially designed to repel the target insects.

Said aims are fully achieved by an autonomous device for nebulising liquids according to the invention as characterised in the appended claims.

The main features of the invention will become more apparent from the following detailed description of a preferred, non-limiting embodiment, illustrated purely by way of example in the accompanying drawings, in which:
- Figure 1 illustrates a schematic side view of an autonomous device for nebulising liquids associated with a hydraulic nebulising system;

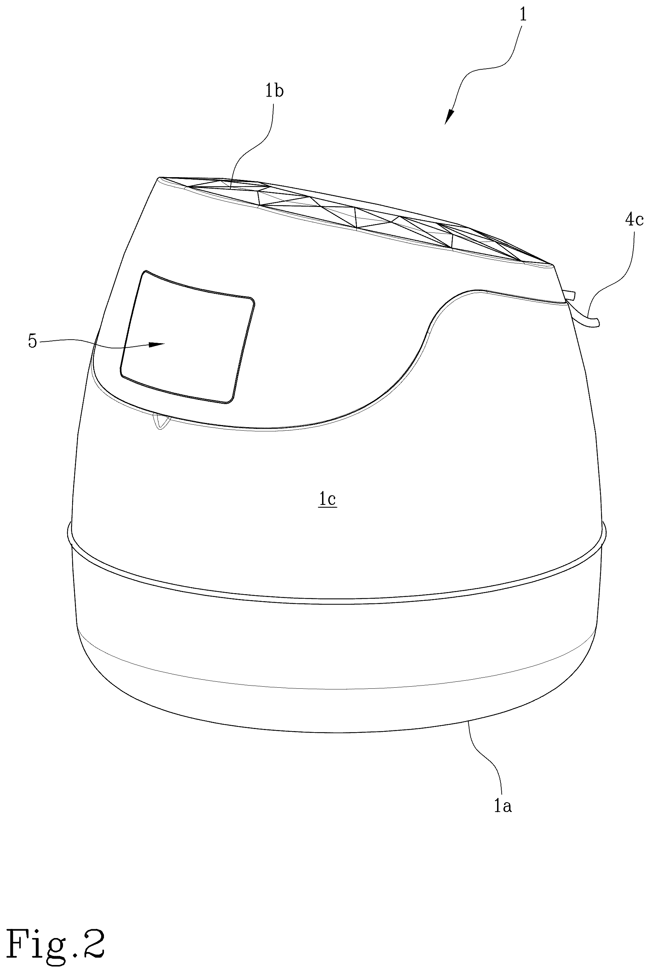

- Figure 2 illustrates a front perspective view of a body forming part of the autonomous device for nebulising liquids;

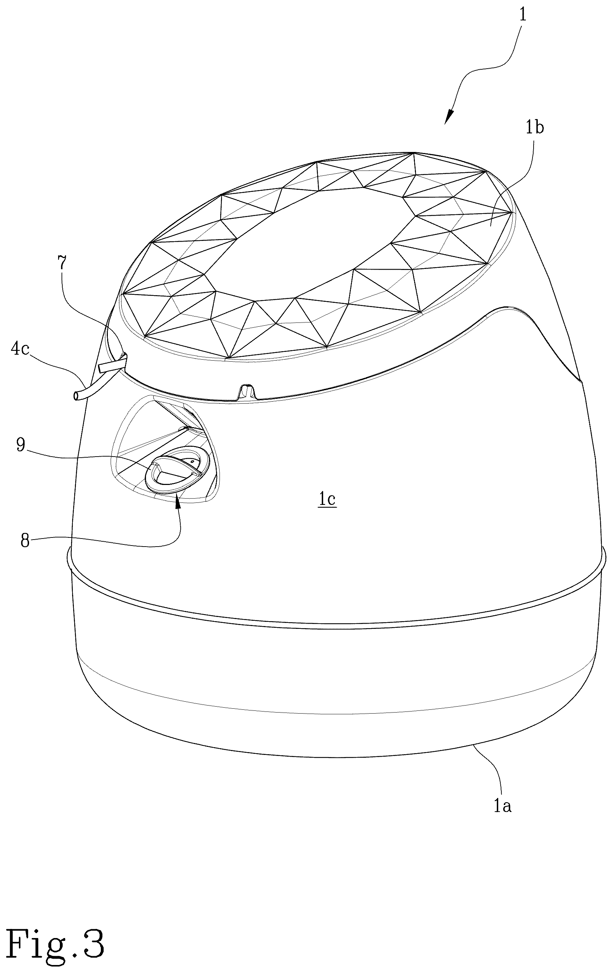

- Figure 3 illustrates a rear perspective view of the body forming part of the autonomous device for nebulising liquids;
- Figure 4 illustrates an exploded perspective view of a first embodiment of the autonomous device referred to in the previous drawings;
- Figure 5 illustrates an exploded perspective view of a second embodiment of the autonomous device referred to in the previous drawings;
- Figure 6 illustrates a diagram of the functional components of the device referred to in the previous drawings.

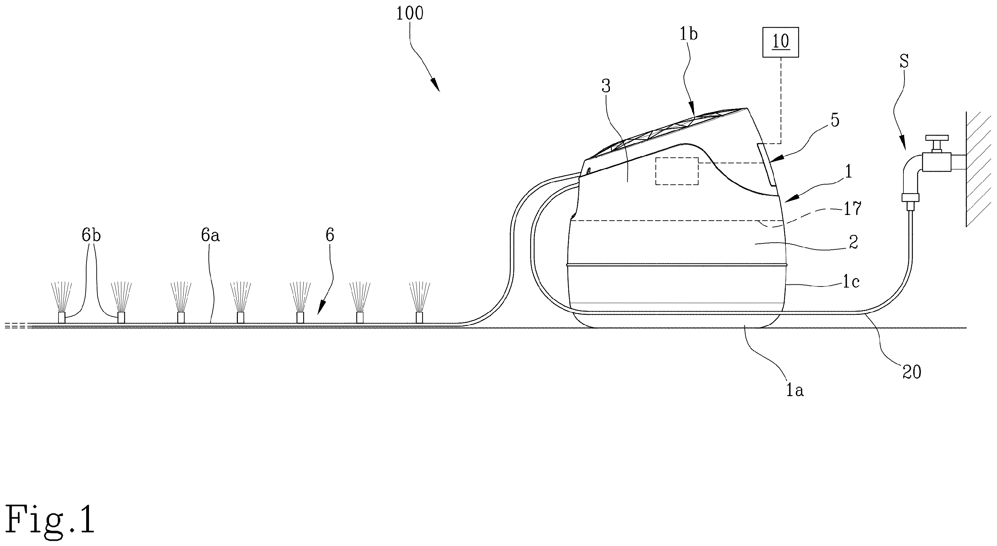

With reference to the accompanying drawings, and in particular to Figure 1, a device for nebulising liquids according to the invention, denoted in its entirety by reference numeral 100, is used preferably, but not exclusively, for treatments against harmful insects in gardens.

As illustrated, the device 100 comprises a body 1 having a lateral surface 1c, a base 1a and a head 1b delimiting a closed inner space of the body 1 (partially cylindrical in shape).

This body has dimensions and weight so that it can be positioned and moved manually in the garden.

As shown in the drawings, the device 100 comprises a dividing wall 17 positioned inside the body 1 so as to separate its inner space into two distinct chambers 2 and 3. The first chamber 2 (lower chamber), contains the liquid to be nebulised.

The second chamber 3 (upper chamber) houses a unit 4 for distributing the liquid to be nebulised present in the first chamber 2.

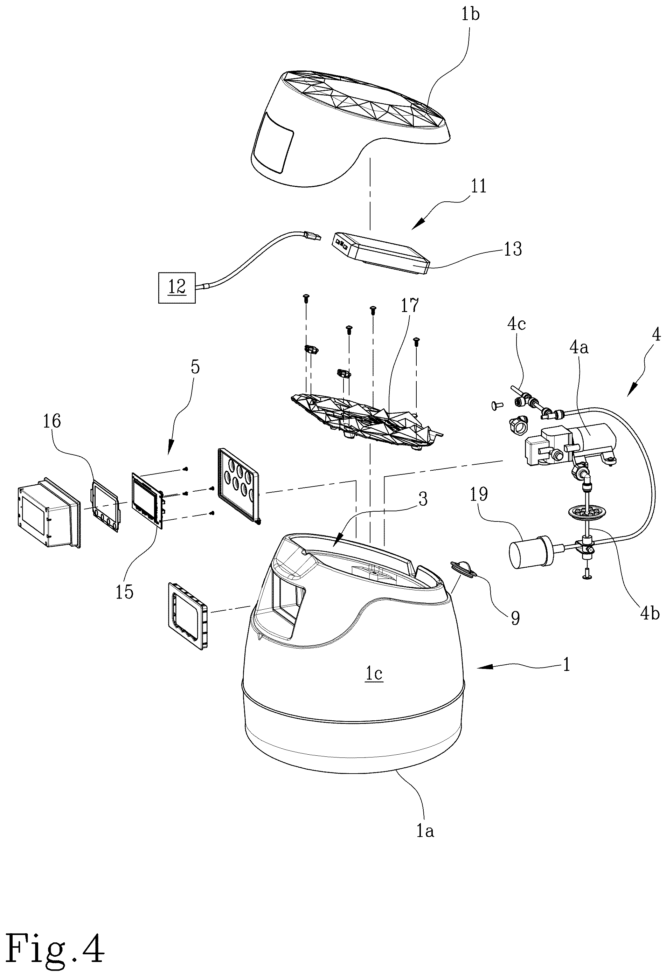

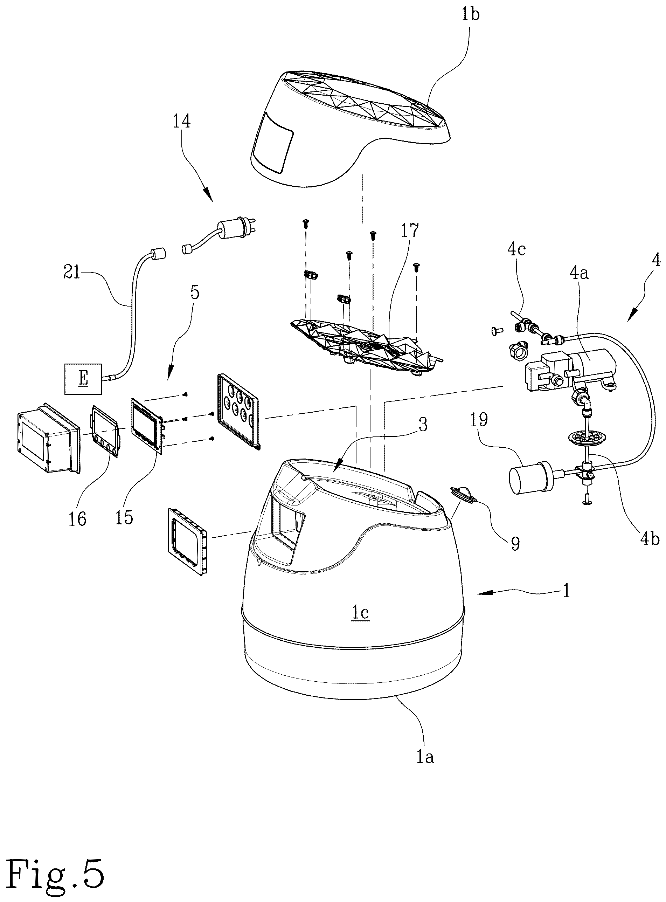

The unit 4 for distributing the liquid is connected to the first chamber 2 through a passage formed in the dividing wall 17 for drawing the liquid. Further, the distribution unit 4 is connected to a hydraulic nebulising system 6, outside the body 1, to supply it with the liquid to be nebulised (see also Figures 4 and 5)

As also shown in the drawings, the device 100 comprises a control unit 5 positioned in the second chamber 3 and connected to the distribution unit 4. The control unit 5 has a plurality of 15 memory banks programmed to activate/deactivate the distribution unit 4 according to respective stored treatment cycles.

It should be noted that hydraulic system 6 for nebulising the liquid is, as mentioned, positioned outside body 1 and connected to the distribution unit 4 through a passage 7 formed in the body 1.

In other words, the device 100 allows one or more ducts 6a arranged in the garden and provided with suitable nebulising nozzles 6b to be fed for the treatment with the appropriate liquid.

It should be noted that the body 1 is provided with an opening 8, reclosable with a cap 9, for feeding liquid into the first containment chamber 2.

In this way it is possible to prepare the appropriate liquid treatment mixture and fill the first chamber 2 so as to set up the treatment cycles automatically. Alternatively, the opening 8 of the body 1 can be engaged by a duct 20 for connection with an external source S (for example mains water) for continuously feeding liquid into the first containment chamber 2.

In this case, the device 100 can be used as an independent liquid distribution centre according to cycles programmable by the control unit 5. Further, the control unit 5 is electrically connected to a detection system provided with external sensors 10 programmed to detect the presence of rain and/or wind (here illustrated with a block) outside and/or around the body 1.

The connection between the unit 5 and the sensors 10 can be direct via cable or via wireless systems.

As shown in Figures 4 and 5, the device 100 comprises an autonomous electrical system 11 for powering the control unit 5 and the distribution unit 4 housed in the second chamber 3 and powered by a solar panel 12 applied to the outside of body 1, preferably on an external surface of the body 1. This autonomous system 11 comprises (for example) at least one battery pack 13 of the externally rechargeable type.

Alternatively, the device 100 comprises a connection unit 14 for connecting by means of a cable 21 the control unit 5 and the distribution unit 4 to an external mains electrical energy source E.

The above-mentioned distribution unit 4 comprises a pump 4a configured for drawing the liquid from the first chamber 2, through a drawing duct 4b inserted in the second chamber 3, and for conveying the liquid into a duct 4c for feeding the liquid outside the body 1, and then connecting to the hydraulic nebulising system 6.

The distribution unit 4 may be provided with a filter unit 19 to keep the ducts of the distribution unit 4 intact.

The above-mentioned control unit 5 comprises the above-mentioned memory banks 15 for programming liquid treatment cycles, which can be controlled by an external keyboard 16 connected to the control unit 5 and associated on the body 1.

The control unit 5 can also be connected to control valves of the duct 21 of the source S for continuously feeding liquid to activate and deactivate the supply of mains water in function of the needs of the treatment cycles.

It should also be noted that the first chamber 2 and the second chamber 3 are separated from each other by the dividing wall 17 having perimeter sealing means.

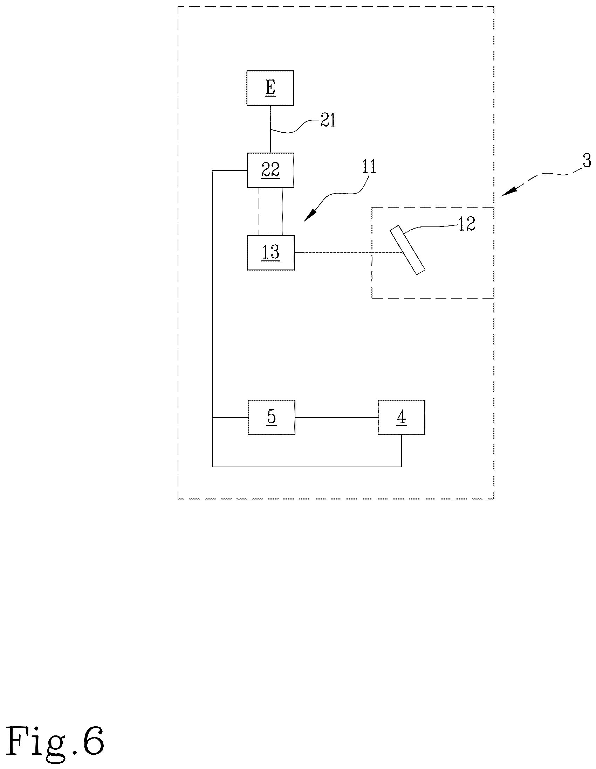

A simplified diagram of the electricity supply and control components of the device 100 is illustrated in Figure 6.

In particular, the system comprises:
- at least one rechargeable battery pack 13 positioned inside the second chamber 3;
- a solar panel 12 connected to the battery pack 13 for the relative charging; the solar panel 12 is mounted on the outside of the body 1;
- a cable 21 for connection to a mains electrical source E, partially housed in the second chamber 3;
- a module 22 for switching the energy sources; the module 22 is connected to the mains electrical source E, to the battery pack 13, to the control unit 5 and to the distribution unit 4; the module 22 is programmed to modify the energy source that can be supplied to the control unit 5 and to the distribution unit 4 as a function of the state of charge of the battery pack 13. It should be noted that the module 22 for switching the energy sources may be integrated into the battery pack 13.

Thanks to a device structured in this way, the intended aims are achieved by a body which can be handled manually and that groups together all the essential components for the treatment cycles in the garden.

The device can be positioned in the most suitable place in the garden, connected to the nebulising system and fed with the mixture necessary for the treatments.

The programmable control unit then allows the actual treatment cycles to be decided upon without the need for subsequent controls.

The entire system has a low environmental impact thanks to the combination of: specific software programming, type of installation and the appropriate biocides to be used.

In particular, the structure of the treatment programmes and the kit provided with the device make it possible to achieve a low environmental impact, as the specific atomisers are installed within hedges and in shaded, damp areas, avoiding the flowering plants and the flowers.

The program cycles allow the selection of treatment delivery times during the night, which are appropriate for the target insects.

The device can be used with low residual pyrethroids that are not active during daylight hours for non-target insects such as bees, butterflies and many other insects which are not targets.

The device can also be used in green areas, at the edge of swimming pools, and in refreshment areas with biocidal repellents based on natural essences specially designed to repel the target insects.

## Claims

1. A device for nebulising liquids for treatment in gardens, **characterised in that** it comprises:
- a body (1) having a lateral surface (1c), a base (1a) and a head (1b) so as to define a closed inner space of the body (1);
- a dividing wall (17) positioned inside the body (1) so as to separate its inner space into:
- a first chamber (2) containing the liquid to be nebulised and
- a second chamber (3) in which a unit (4) for distributing the liquid to be nebulised present in the first chamber (2) is housed; the unit (4) being connected to the first chamber (2) through an opening formed in the dividing wall (17) tor drawing the liquid; said unit (4) also being connected to a hydraulic nebulising system (6), outside the body (1), to supply it with the liquid;
- a control unit (5) positioned in the second chamber (3) and connected to the distribution unit (4); the control unit (5) having a plurality of memory banks (15) programmed to activate/deactivate the distribution unit (4) according to respective stored treatment cycles.

2. The device according to claim 1, wherein the hydraulic system (6) for nebulising the liquid is positioned outside the body (1) and connected to the distribution unit (4) through a passage (7) formed on the body (1).

3. The device according to claim 1 or 2, wherein the body (1) is provided with an opening (8), reclosable with a cap (9), for feeding liquid into the first containment chamber (2).

4. The device according to claim 1 or 2, wherein the body (1) is provided with an opening (8) which can be engaged by a duct (20) for connection with an external source (S) of liquid for continuously feeding liquid into the first containment chamber (2).

5. The device according to any one of the preceding claims, wherein the control unit (5) is electrically connected to a detection system provided with sensors (10) programmed to detect the presence of rain outside and around the body (1).

6. The device according to any one of the preceding claims, comprising an autonomous system (11) for powering the control unit (5) and the distribution unit (4) housed in the second chamber (3) and powered by a solar panel (12) applied to the outside of the body (1); said autonomous system (11) comprising at least a battery pack (13).

7. The device according to any one of the preceding claims from 1 to 5, comprising a connection unit (14) for connecting by means of a cable (21) the control unit (5) and the distribution unit (4) with an external source (E) of electricity.

8. The device according to any one of the preceding claims, wherein the distribution unit (4) comprises at least one pump (4a) configured for drawing the liquid from the first chamber (2), through a drawing duct (4b) inserted in the second chamber (3), and for conveying the liquid into a duct (4c) for feeding the liquid outside the body (1).

9. The device according to any one of the preceding claims, wherein the control unit (5) comprises the memory banks (15) for programming liquid treatment cycles which can be controlled by an external keyboard (16) connected to the unit (5) associated on the body (1).

10. The device according to any one of the preceding claims, wherein the first chamber (2) and the second chamber (3) are separated from each other by the dividing wall (17) having sealing means.

11. The device according to any one of claims 1 to 5, comprising an electricity supply system for the control unit (5) and the distribution unit (4) having:
- a rechargeable battery pack (13) positioned inside the second chamber (3);
- a solar panel (12) connected to the battery pack (13) for the relative charging; the solar panel (12) being mounted on the outside of the body (1);
- a cable (21) for connecting with a mains electrical source (E) partially housed in the second chamber (3);
- a module (22) for switching the energy sources; the module (22) being connected to the mains electrical source (E), to the battery pack (13), to the control unit (5) and to the distribution unit (4); the module being programmed to modify the energy source that can be supplied to the control unit (5) and to the distribution unit (4) as a function of the state of charge of the battery pack (13).

12. The device according to claim 11, wherein the module (22) for switching the energy sources is integrated into the battery pack (13).
